(19) **Europäisches Patentamt**
**European Patent Office**
**Office européen des brevets**

(11) **EP 4 650 137 A1**

(12) **EUROPÄISCHE PATENTANMELDUNG**

(43) Veröffentlichungstag:
**19.11.2025 Patentblatt 2025/47**

(21) Anmeldenummer: **25176794.3**

(22) Anmeldetag: **15.05.2025**

(51) Internationale Patentklassifikation (IPC):
**B29C 33/38** (2006.01)   **B29C 33/42** (2006.01)
**B29C 33/56** (2006.01)   **B29C 41/26** (2006.01)
**B29C 43/22** (2006.01)   G03G 7/00 (2006.01)
**B29C 59/06** (2006.01)

(52) Gemeinsame Patentklassifikation (CPC):
**B29C 33/424; B29C 33/3814; B29C 33/56;
B29C 35/0888; B29C 41/26; B29C 43/222;**
B29C 59/04; B29C 59/06; B29C 2059/023;
B29C 2791/006

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **16.05.2024 DE 102024113791**

(71) Anmelder: **Karlsruher Institut für Technologie,
Körperschaft
des öffentlichen Rechts
76131 Karlsruhe (DE)**

(72) Erfinder:
• **WALHEIM, Stefan
76356 Weingarten (DE)**

• **FISCHER, Moritz
74376 Gemmrigheim (DE)**
• **BARCZEWSKI, Matthias
76532 Baden-Baden (DE)**
• **DROLL, Robert
77815 Bühl (DE)**
• **SPEICHERMANN-JÄGEL, Lutz
76185 Karlsruhe (DE)**
• **SCHIMMEL, Thomas
76131 Karlsruhe (DE)**
• **MEDEBACH, Ingo
69242 Mühlhausen (DE)**

(74) Vertreter: **Müller-Boré & Partner
Patentanwälte PartG mbB
Friedenheimer Brücke 21
80639 München (DE)**

(54) **VERFAHREN ZUR KONTINUIERLICHEN ABFORMUNG VON OBERFLÄCHENSTRUKTUREN IN STRUKTURIERBAREN MATERIALIEN UND VORRICHTUNG HIERFÜR**

(57)    Die Anmeldung betrifft eine Vorrichtung zur kontinuierlichen Abformung von Oberflächenstrukturen in ein strukturierbares Material sowie ein Verfahren zur kontinuierlichen Abformung von Oberflächenstrukturen in ein strukturierbares Material unter Verwendung der Vorrichtung und eine daraus erhaltene Folie sowie deren Verwendung. Die Vorrichtung umfasst eine gaspermeable Walze mit einem gaspermeablen, bevorzugt elastomeren Mantel, wobei die äußere Oberfläche des Mantels eine Negativstruktur der abzuformenden Oberflächenstrukturen trägt, als auch einen Gasrezipient hinter der inneren Manteloberfläche, wobei der Gasrezipient so ausgestaltet ist, dass er das zu füllende Volumen der abzuformenden Oberflächenstrukturen aufnehmen oder abführen kann.

Fig. 1

EP 4 650 137 A1

## Beschreibung

Die vorliegende Erfindung betrifft eine Vorrichtung zur kontinuierlichen Abformung von Oberflächenstrukturen in ein strukturierbares Material, ein Verfahren zur kontinuierlichen Abformung von Oberflächenstrukturen in ein strukturierbares Material unter Verwendung der Vorrichtung und eine daraus erhaltene Folie sowie deren Verwendung.

Folien oder Platten mit mikrostrukturierter Oberfläche finden vielfältige Anwendung, beispielsweise in der Mikrooptik für Solaranlagen oder großflächigen LEDs, oder zur Herstellung superhydrophober, mikrostrukturierter Oberflächen. Auch im Bereich superbenetzbarer Oberflächen (z.B. zur Tausammlung) können entsprechend fein strukturierte Oberflächen eingesetzt werden.

Für eine großflächige Oberflächenstrukturierung sind die beiden dominierenden Verfahren die Ultraviolettlithografie (UV) und das Heißprägen.

Die Nano-UV-Lithografie ist ein Verfahren, bei dem ein UV-härtendes Polymer zunächst durch Formen auf einer Trägerfolie strukturiert und anschließend ausgehärtet wird. Diese strukturierten Trägerfolien können aus verschiedenen Materialien hergestellt werden, darunter Polydimethylsiloxan (PDMS), verschiedene Fluorpolymere (wie beispielsweise Ethylen-Tetrafluorethylen-Copolymere (ETFE) und Perfluorpolyether (PFPE)) oder Metalle.

Die Herstellung solcher Trägerfolien kann mit verschiedenen Methoden erfolgen, darunter Nanoimprinting, UV-Lithografie oder Fotolithografie in Kombination mit reaktivem Ionenätzen (RIE) oder ohne RIE.

Das UV-Polymer wird mittels Sprühbeschichtung, Bad- oder Rakelmethode aufgetragen und anschließend mit UV-Licht bestrahlt. Das Polymer härtet aus und nimmt im Inneren der Form eine Form an, die auch nach der Entnahme aus der Form erhalten bleibt. Auf diese Weise lassen sich relativ schnell fein detaillierte strukturierte Oberflächen herstellen. Ein großer Nachteil ist die begrenzte Materialauswahl, da nur UV-härtende Polymere mit diesem Verfahren geformt werden können, und die Notwendigkeit hochentwickelter optischer Einrichtungen und einer sehr sauberen Umgebung.

Das andere vorherrschende Verfahren ist das Heißprägen, bei dem ein thermoplastisches Material zunächst erweicht und dann die gewünschte Oberflächenstruktur durch Anwendung von Druck durch eine Negativform geformt wird.

Beim Abformen einer Mikrostruktur in ein thermoplastisches Material werden in der Regel gravierte Stahlwalzen oder solche mit einer strukturierten Nickeloberfläche verwendet. Dabei ist es nicht möglich Mikrostrukturen mit hohem Aspektverhältnis (grösser als 0.5 bis 1) abzuformen, da die Gefahr besteht, dass die Strukturen abbrechen und in der Gravurwalze stecken bleiben. In letzter Zeit wurde dieses Problem teilweise durch die Verwendung elastomerer Walzenkörper adressiert. Dadurch können zwar höhere Aspektverhältnisse erreicht werden, aber ein vollständiges Eindringen der Schmelze in die auf der Walze vorgesehenen Strukturen kann nun nicht mehr durch Anwenden von Druck auf eine steife Walze erzwungen werden.

Ausgehend von diesen Anforderungen liegt der vorliegenden Erfindung die Aufgabe zu Grunde, eine Vorrichtung zur kontinuierlichen Abformung von Oberflächenstrukturen in ein strukturierbares Material bereitzustellen, die das Abformen von Strukturen mit hohem Aspektverhältnis ermöglicht und bei der sich ein Problem des ungenügenden Füllgrades des strukturierbaren Materials in der abzuformenden Negativstruktur nicht stellt. Weiter ist es Aufgabe der vorliegenden Erfindung ein Verfahren zur kontinuierlichen Abformung unter Verwendung der Vorrichtung bereitzustellen.

Diese technischen Aufgaben werden durch die erfindungsgemäßen Ausführungsformen gelöst.

Insbesondere betrifft die vorliegende Erfindung eine Vorrichtung zur kontinuierlichen Abformung von Oberflächenstrukturen in ein strukturierbares Material, wobei die Vorrichtung umfasst:

(i) eine gaspermeable Walze mit einem gaspermeablen, bevorzugt elastomeren Mantel, wobei die äußere Oberfläche des Mantels eine Negativstruktur der abzuformenden Oberflächenstrukturen trägt;

(ii) eine Ausgabeeinheit zur Ausgabe des strukturierbaren Materials, wobei die Ausgabeeinheit so gestaltet ist, dass sie das strukturierbare Material auf die äußere Oberfläche des gespermeablen Mantels ausgibt; und

(iii) einen Gasrezipient hinter der inneren Manteloberfläche, wobei der Gasrezipient so ausgestaltet ist, dass er das zu füllende Volumen der abzuformenden Oberflächenstrukturen aufnehmen oder abführen kann.

Im Rahmen der vorliegenden Anmeldung beziehen sich relative Positionen der einzelnen Bestandteile der Vorrichtung, beispielsweise "vor" oder "nach", auf die Anordnung der Bestandteile in Prozessrichtung und in Drehrichtung der gaspermeablen Walze.

Weiter bedeutet eine kontinuierliche Abformung im Rahmen der vorliegenden Anmeldung, dass eine Negativstruktur der abzuformenden Oberflächenstrukturen mehr als einmal in ein strukturierbares Material abgeformt wird, wobei ein manuelles Eingreifen oder Versetzen der Negativstruktur nicht nötig ist. Ein solches kontinuierliches Abformen kann beispielsweise durch kontinuierliches Ausgeben eines strukturierbaren Materials auf eine sich drehende Walze und kontinuierliches Abnehmen des verfestigten strukturierbaren Materials von der Walze, bevor die Walze eine ganze Umdrehung vollendet hat, realisiert werden. Ein anderes Beispiel für eine kontinuierliche Abformung ist ein Rolle-zu-Rolle Verfahren, bei dem das zu formende, strukturierbare Material als Folie auf einer Rolle vorliegt, von dieser Rolle abgespult wird, von einer rotierenden Walze mit den Oberflächenstrukturen versehen wird, und auf eine weitere Rolle aufgespult wird.

Erfindungsgemäß umfasst die Vorrichtung (i) eine gaspermeable Walze mit einem gaspermeablen, bevorzugt elastomeren Mantel, wobei die äußere Oberfläche des Mantels eine Negativstruktur der abzuformenden Oberflächenstrukturen trägt.

Das Material, aus dem die gaspermeable Walze geformt ist, ist nicht weiter eingeschränkt, sofern das Material eine ausreichende Druck- und Temperaturstabilität für den gewünschten Abformungsprozess aufweist.

Beispielsweise kann die gaspermeable Walze aus Polymerverbindungen, beispielsweise auf der Basis von Silikon oder Polyurethan oder Polystyrol oder aus einem offenporigen oder geschlossenporigen Polymerschaum, aber auch aus metallischen Verbindungen geformt sein. Die gaspermeable Walze ist vorzugsweise aus einem porösen Metall, beispielsweise porösem Aluminium, geformt. Die gaspermeable Walze kann jedoch auch aus einem Metalloxid oder einem keramischen Material geformt sein.

Die Gaspermeabilität der Walze kann sich einerseits aus einer inhärenten Gaspermeabilität des für die Walze verwendeten Werkstoffs ergeben, beispielsweise durch die Verwendung von gaspermeablen Polymerverbindungen. Andererseits können für die Walze auch Werkstoffe verwendet werden, die als dichtes Material nicht gaspermeabel sind, denen jedoch durch eine poröse Strukturierung Gaspermeabilität verliehen wird.

Bei einer solchen porösen Walze können sich die Poren durch die gesamte Dicke der Walze, also von der Walzenoberfläche bis hin zur Symmetrieachse der Walze erstrecken. Vorzugsweise ist um die Symmetrieachse der gaspermeablen Walze ein hohler oder gaspermeabler Bereich angeordnet, der auch die Symmetrieachse selbst mit umfassen kann. Auf diese Weise können Gase einfach die Walze durchströmen.

Die Porosität kann der Walze hierbei entweder durch bestimmte Herstellungsverfahren, beispielsweise Gussverfahren, vermittelt werden, oder die Poren werden mechanisch in eine bereits bestehende, massive Walze eingebracht.

Die Poren weisen vorzugsweise einen Durchmesser von 10 bis 1000 $\mu$m auf. Auf diese Weise erhält die Walze eine ausreichende Durchlässigkeit und ist trotzdem stabil genug, um zur Abformung genutzt werden zu können. Die Anzahl von Poren auf der Walzenoberfläche liegt vorzugsweise in einem Bereich von $1 \times 10^6$ bis $2 \times 10^7$ Poren pro m$^2$ Walzenoberfläche. Auf diese Weise kann eine ausreichende Porosität der Walze sichergestellt werden. Die Anzahl der Poren auf der Walzenoberfläche liegt weiter bevorzugt in einem Bereich von $2 \times 10^6$ bis $1 \times 10^7$ Poren pro m$^2$ Walzenoberfläche, weiter bevorzugt in einem Bereich von $5 \times 10^6$ bis $8 \times 10^6$ Poren pro m$^2$ Walzenoberfläche.

Somit ergibt sich vorzugsweise eine Porosität der Oberfläche der Walze in einem Bereich von 40 bis 70%, weiter bevorzugt zwischen 50 und 60%.

Weiter bevorzugt kann die gaspermeable Walze im Inneren und/oder der Gasrezipient mit Unterdruck bzw. Vakuum beaufschlagt werden. Hierfür kann beispielsweise eine Vakuumpumpe mit der gaspermeablen Walze und/oder dem Gasrezipienten verbunden werden, um das in der gaspermeablen Walze und/oder dem Gasrezipienten vorhandene Gas abzusaugen.

Im Falle einer porösen Walze weist die Walze bevorzugt eine hohle Achse auf, so dass sich die Poren durch die gesamte Dicke der Walze, also von der Walzenoberfläche bis hin zum hohlen oder gaspermeablen Bereich, der um die Symmetrieachse der Walze angeordnet ist, erstrecken. Da die Poren der porösen Walze auf diese Weise von dem hohlen oder gaspermeablen Bereich aus zugänglich sind, wird auch das in den Poren vorhandene Gas abgesaugt, wenn dieser Bereich mit Unterdruck bzw. Vakuum beaufschlagt wird. Somit kann der Unterdruck bzw. das Vakuum auch an der Oberfläche der porösen Walze bereitgestellt werden.

Erfindungsgemäß befindet sich auf der Oberfläche der gaspermeablen Walze ein gaspermeabler, bevorzugt elastomerer Mantel, wobei die Oberfläche des gaspermeablen Mantels eine Negativstruktur der abzuformenden Oberflächenstrukturen trägt.

Durch die gaspermeable Eigenschaft des Mantels und das Aufliegen des Mantels auf der Oberfläche der gaspermeablen Walze wirkt sich ein auf der Oberfläche der gaspermeablen Walze bereitgestellter Unterdruck bzw. Vakuum auch an der Oberfläche des gaspermeablen Mantels aus.

Bevorzugt ist die Kombination aus gaspermeabler Walze und Vakuumpumpe so ausgewählt, dass ein Druck von 750 mbar oder weniger, insbesondere von 500 mbar oder weniger, im Inneren der gaspermeablen Walze erreicht werden kann. Im Hinblick auf eine vollständigere und/oder schnellere Abformung der Oberflächenstrukturen beträgt der im Inneren der gaspermeablen Walze erreichbare Druck weiter bevorzugt 350 mbar oder weniger, noch weiter bevorzugt 100 mbar oder weniger, und am meisten bevorzugt 50 mbar oder weniger.

Die Vorrichtung ist weiter bevorzugt mit einem Prozessgas beaufschlagbar, das einen geringeren Diffusionskoeffizienten aufweist als das Umgebungsgas außerhalb der Walze, vorzugsweise mit einem Prozessgas, ausgewählt aus der Gruppe, bestehend aus Stickstoff (N$_2$), Helium (He), Wasserstoff (H$_2$), CO$_2$ oder Gemischen daraus. Durch die Verwendung eines solchen Prozessgases kann die Eindringeigenschaft des strukturierbaren Materials in die Negativstruktur des gaspermeablen Mantels verbessert werden. Die Verwendung des Prozessgases ist besonders vorteilhaft im Zusammenspiel mit der Beaufschlagung der gaspermeablen Walze und/oder des Gasrezipienten mit Unterdruck bzw. Vakuum, da dann die Form schneller mit dem strukturierbaren Material gefüllt werden kann.

Die abzuformenden Oberflächenstrukturen weisen vorzugsweise ein Aspektverhältnis (Verhältnis von Strukturhöhe zu Strukturbreite) von mindestens 1,0, mehr bevorzugt mindestens 1,5 und besonders bevorzugt von mindestens 2,0 auf. Eine Obergrenze für das Aspektverhältnis der abzuformenden Oberflächenstrukturen ist nicht weiter beschränkt und ergibt sich aus Beschränkungen der verwendeten Materialien und Fertigungstechniken. Im Hinblick auf Aufwand und Kosten bei der Herstellung der Negativstrukturen kann die Obergrenze des Aspektverhältnisses 20 betragen.

Die weiteren Strukturmerkmale der abzuformenden Oberflächenstrukturen sind nicht weiter eingeschränkt. So kann beispielsweise die Grundfläche der Strukturen eine regelmäßige oder unregelmäßige Struktur aufweisen, und beispielsweise rund, oval, dreieckig, quadratisch, rechteckig, fünfeckig oder sechseckig sein. Um eine möglichst gute Lösbarkeit der abgeformten Strukturen aus der Negativmatrix zu ermöglichen, ist die Grundfläche vorzugsweise rund oder oval, besonders bevorzugt rund.

Der Durchmesser bzw. die Diagonale der Grundfläche der abzuformenden Oberflächenstrukturen beträgt vorzugsweise mindestens 300 nm. Wenn der Durchmesser der Grundfläche kleiner als 300 nm ist, kann ein vollständiges Eindringen des strukturierbaren Materials in die abzuformenden Negativstrukturen bei teilkristallinen Materialien nicht sichergestellt werden. Bei amorphen strukturierbaren Materialien ist die Untergrenze der Strukturgrößen jedoch nicht weiter eingeschränkt. Die Obergrenze des Durchmessers bzw. der Diagonale der Grundfläche ist nicht sonderlich beschränkt. Zweckmäßig ist eine Obergrenze von 500 $\mu$m, da ein Fachmann für größere Strukturen auf andere Fertigungstechniken zurückgreifen kann.

Im Hinblick auf das Aspektverhältnis der abzuformenden Oberflächenstrukturen von mindestens 1,0 entspricht die Höhe der abzuformenden Oberflächenstrukturen mindestens dem Durchmesser bzw. der Diagonale der Grundfläche. Somit hat eine Struktur mit einem Durchmesser bzw. einer Diagonale von 500 nm eine Höhe von mindestens 500 nm. In ähnlicher Weise haben Strukturen mit einem Durchmesser bzw. einer Diagonale der Grundfläche von 500 $\mu$m bei einem Aspektverhältnis von 20 eine Höhe von 10 mm. Strukturen mit geringerem Aspektverhältnis als 1,0 sind ohne Einschränkung abformbar.

Die Wände der abzuformenden Oberflächenstrukturen können gerade sein, so dass die Diagonale bzw. der Durchmesser der Strukturen in jedem Höhenabschnitt der Struktur gleich ist. Alternativ können die Wände der Strukturen geneigt sein, so dass in der Negativstruktur die Grundfläche einen kleineren Durchmesser bzw. eine kleinere Diagonale aufweist als an ihrer höchsten Stelle. Eine Ausführungsform, in der die Wände der Strukturen geneigt sind, so dass in der Negativstruktur die Grundfläche einen größeren Durchmesser bzw. eine größere Diagonale aufweist, als an ihrer höchsten Stelle bildet vorzugsweise nicht Teil der beanspruchten Erfindung, da in diesem Fall die abgeformten Strukturen nur mit erheblichem Aufwand aus der Negativstruktur gelöst werden können.

Die einzelnen Oberflächenstrukturen können dieselbe Form aufweisen, oder es kann eine Mischung verschiedener Oberflächenstrukturen auf dem gaspermeablen Mantel vorgesehen werden.

Die Anordnung der Oberflächenstrukturen auf dem gaspermeablen Mantel ist nicht sonderlich eingeschränkt und kann sowohl regelmäßig als auch unregelmäßig erfolgen. Bevorzugt erfolgt die Anordnung jedoch regelmäßig, insbesondere periodisch. Das bedeutet, dass, ausgehend von einer Oberflächenstruktur, in einer Richtung entlang des Mantels, die Abstände der Oberflächenstrukturen zueinander gleich sind.

Vorzugsweise ist der kleinste Abstand einer Oberflächenstruktur zur nächsten mindestens so groß, wie der Durchmesser der Grundfläche der Oberflächenstruktur.

Auf diese Weise können ein fehlerfreies Abformen und ein einfaches Entnehmen des verfestigten strukturierbaren Materials aus dem gaspermeablen Mantel sichergestellt werden.

Der gaspermeable Mantel hat vorzugsweise eine Gaspermeabilität für Stickstoff ($N_2$) von mindestens 200 Barrer, besonders bevorzugt von mindestens 500 Barrer. Die Obergrenze der Gaspermeabilität ist nicht sonderlich eingeschränkt. Aufgrund materialspezifischer Limitationen beträgt die Obergrenze der Gaspermeabilität für Stickstoff ($N_2$) gewöhnlich 2000 Barrer.

Der gaspermeable Mantel besteht bevorzugt aus einem elastomeren Material. Es ist bekannt, dass Elastomere für unterschiedliche Gase eine unterschiedliche Gaspermeabilität aufweisen können. Vor diesem Hintergrund hat der gaspermeable Mantel vorzugsweise eine Gaspermeabilität für Kohlenstoffdioxid ($CO_2$) von mindestens 1000 Barrer, besonders bevorzugt von mindestens 2000 Barrer. Die Obergrenze der Gaspermeabilität ist nicht sonderlich eingeschränkt. Aufgrund materialspezifischer Limitationen beträgt die Obergrenze der Gaspermeabilität für Kohlenstoffdioxid ($CO_2$) gewöhnlich 4000 Barrer.

Hierbei entspricht 1 Barrer einer Gaspermeabilität von $10^{-10}$ cm$^3$ / s·cm·cmHg bzw. $7,5 \cdot 10^{-18}$ m$^3$·s·kg$^{-1}$. Die Bestimmung der Gaspermeabilität erfolgt nach ISO 15105-2: 2003-02.

Elastomere Materialien mit einer Gaspermeabilität in den vorstehend beschriebenen Bereichen sind einem Fachmann bekannt und beispielsweise in "Evaluation of gas diffusion through plastic materials used in experimental and sampling equipment: Peter Kjeldsen, Water Research, Vol. 27, No. I, pp. 121-131 (1993)" tabelliert. Besonders bevorzugt können gaspermeable Materialien aus der Stoffklasse der Silikone verwendet werden.

Geeignete gaspermeable Materialien aus der Stoffklasse der Silikone sind beispielsweise gefüllte, additionsvernetzende 2-Komponenten Silikonkautschuke wie z.B. TFC Troll Factory Silikon Kautschuk Typ 1, das Produkt Zhermack ZA 50, TFC Troll Factory Silikon Kautschuk Typ 3, oder Wacker Elastosil M4370.

Der gaspermeable Mantel kann aus mehreren einzelnen getrennten Stücken zusammengesetzt sein, die jeweils mit einer Halterung auf der Oberfläche der gaspermeablen Walze getragen werden. Alternativ kann der gaspermeable Mantel einstückig ausgeführt werden. Hierbei kann der Mantel entweder aus einem einzigen Stück hergestellt werden, oder mehrere einzelne Stücke werden dauerhaft miteinander verbunden, um einen einstückigen Mantel herzustellen.

Ein einstückiger Mantel, also ein Mantel, der ohne Halterungen im Bereich der Texturierung auskommt, hat den Vorteil, dass die abgeformten Strukturen ohne unterbrechende Strukturen abgeformt werden können und somit eine stoßfreie Endlosstruktur besser gefertigt werden kann. Außerdem fällt bei einem einstückigen Mantel die Notwendigkeit weg, die einzelnen getrennten Stücke zueinander auszurichten, um einen gleichförmigen Mantel zu erhalten.

Bevorzugt ist der gaspermeable Mantel austauschbar vorgesehen. Da die Negativstruktur der abzuformenden Oberflächenstrukturen nur in dem gaspermeablen Mantel vorgesehen ist, kann dieselbe gaspermeable Walze durch Austausch des gaspermeablen Mantels einfach auf andere Oberflächenstrukturen umgerüstet werden.

Diese Austauschbarkeit ist sowohl bei einem einstückigen Mantel als auch bei einem Mantel, der aus mehreren getrennten Teilstücken besteht, gegeben. Insbesondere kann ein einstückiger Mantel auf Grund des verwendeten Materials ausreichend dehnbar und elastisch ausgestaltet sein, um von der gaspermeablen Walze abgezogen und wieder aufgesetzt werden zu können. Bei einem gaspermeablen Mantel, der aus mehreren getrennten Teilstücken besteht, können einzelne Teilstücke von der gaspermeablen Walze abgenommen und ausgetauscht werden und es ist nicht nötig, den kompletten Mantel von der Walze abzuziehen.

In beiden Fällen kann durch eine spätere Beaufschlagung mit Unterdruck bzw. Vakuum ein formschlüssiges Aufliegen des gaspermeablen Mantels auf der gaspermeablen Walze oder dem Gasrezipienten sichergestellt werden.

Verfahren für die Herstellung eines solchen gaspermeablen Mantels sind einem Fachmann prinzipiell bekannt und können beispielsweise verschiedene Lithographie- und Abformtechniken verwenden.

Beispielsweise kann eine Positivstruktur der abzuformenden Strukturen mittels Fotolithographie in ein fotohärtbares Material geschrieben und entwickelt werden.

Von dieser Positivstruktur kann ein Negativabdruck, beispielsweise in einem Silikon, genommen werden. Von dieser Negativstruktur kann wiederrum ein Positivabdruck in einem orthogonalen Material, beispielsweise einem Epoxidharz, genommen werden. Von dem so erhaltenen Positivabdruck kann schließlich der finale Negativabdruck in einem gaspermeablen Elastomer genommen werden, der dann für den gaspermeablen Mantel der gaspermeablen Walze verwendet wird.

Erfindungsgemäß umfasst die Vorrichtung weiter (ii) eine Ausgabeeinheit, zur Ausgabe eines strukturierbaren Materials, wobei die Ausgabeeinheit so gestaltet ist, dass sie das strukturierbare Material auf die äußere Oberfläche des gaspermeablen Mantels der gaspermeablen Walze ausgibt.

Diese Ausgabeeinheit kann beispielsweise ein Extruder mit einer oder mehreren Schnecken sein, der ein beispielsweise thermoplastisches Rohmaterial verarbeiten und eine Schmelze des Rohmaterials ausgeben kann. Alternativ kann die Ausgabeeinheit eine Abspuleinheit sein, die eine bereits vorgefertigte Folie von einer Rolle abspult. Weiter kann die Ausgabeeinheit in Form einer Spritzdüse ausgestaltet sein, die ein flüssiges oder gelartiges strukturierbares Material ausgeben kann.

Gegebenenfalls umfasst die Vorrichtung weiter eine Zuführeinheit, zum Zuführen des von der Ausgabeeinheit ausgegebenen strukturierbaren Materials auf die Oberfläche des gaspermeablen Mantels der gaspermeablen Walze. Im Zusammenspiel mit einem Extruder als Ausgabeeinheit, kann die Zuführeinheit beispielsweise als Düse, insbesondere als Schlitzdüse, ausgestaltet sein. Diese Düse ist gegebenenfalls erwärmbar, um eine Schmelze eines thermoplastischen Materials zuführen zu können. In einer Ausführungsform, in der die Ausgabeeinheit eine Abspuleinheit ist, kann die Zuführeinheit beispielsweise eine Spann- und/oder Andruckrolle umfassen, um die Folie zuzuführen.

Erfindungsgemäß können die Ausgabeeinheit und die Zuführeinheit sowohl ein gemeinsames Bauteil bilden, oder sie können durch mehrere einzelne Bauteile realisiert werden.

Die erfindungsgemäße Vorrichtung umfasst weiter (iii) einen Gasrezipient hinter der inneren Manteloberfläche, wobei der Gasrezipient so ausgestaltet ist, dass er das zu füllende Volumen der abzuformenden Oberflächenstrukturen aufnehmen oder abführen kann. In seiner einfachsten Ausführungsform entspricht der Gasrezipient dem äußeren Umfangsbereich der gaspermeablen bzw. porösen Walze. In diesem Fall wird das ursprünglich in der Negativstruktur der abzuformenden Oberflächenstrukturen vorhandene Gasvolumen auf Grund der Infiltration mit dem strukturierbaren Material durch den gaspermeablen Mantel in den äußeren Umfangsbereich der Walze verdrängt.

Alternativ oder zusätzlich kann der Gasrezipient auch als eigenständiges Bauteil ausgeführt sein. So kann zwischen dem gaspermeablen Mantel und der Walze eine Schicht eines porösen Materials aufgetragen sein, dass das ursprünglich in der Negativstruktur der abzuformenden Oberflächenstrukturen vorhandene Gasvolumen aufnehmen kann. In einer solchen Ausführungsform muss die Walze der Vorrichtung nicht zwangsläufig gaspermeabel ausgeführt sein, sondern kann massiv bzw. dicht sein.

Gemäß der vorliegenden Erfindung ist das strukturierbare Material nicht weiter eingeschränkt, solange es in einem ersten Zustand in der Lage ist, die Negativstruktur der abzuformenden Oberflächenstrukturen auf der äußeren Oberfläche des gaspermeablen Mantels zu infiltrieren und in einen zweiten Zustand übergehen kann, in dem es die abgeformten Positivstrukturen dauerhaft behält.

Beispielsweise kann das strukturierbare Material ein thermoplastisches Material sein. In diesem Fall entspricht der erste Zustand einem Zustand, in dem das thermoplastische Material über die thermoplastische Temperatur erwärmt ist und als Schmelze vorliegt. Durch aktives oder passives Abkühlen unter die thermoplastische Temperatur kann das thermoplastische Material in einen zweiten, verfestigten Zustand überführt werden.

Die Art des thermoplastischen Materials ist nicht weiter beschränkt, solange es sich zum Abformen eignet. Beispielsweise können einem Fachmann bekannte thermoplastische Materialien wie Acrylnitril-Butadien-Styrol (ABS), Polyamide (PA), Polymilchsäure (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), thermoplastisches Polyurethan (TPU) und Polyvinylchlorid (PVC) eingesetzt werden. Diese können für die Ausgabeeinheit beispielsweise als pelletiertes Rohmaterial oder als vorkonfektionierte Folie bereitgestellt werden. Dementsprechend wird das Material entweder als Schmelze oder als Folie auf die Oberfläche des gaspermeablen Mantels der gaspermeablen Walze zugeführt.

Alternativ kann das strukturierbare Material ein strahlungshärtbares Material oder ein durch eine chemische Reaktion härtbares Material sein. In diesem Fall liegen im ersten Zustand Monomer- oder Oligomereinheiten vor, die in einem Härtungsprozess zu einem Polymer vernetzt werden können. Geeignete Materialen können beispielsweise durch Strahlung im Bereich des sichtbaren Lichts, Ultaviolett-, Röntgen-, Infrarot- oder Mikrowellenstrahlung härtbar sein. Das strahlungshärtbare Material kann beispielsweise ein Photolack sein.

Im Falle eines strahlungshärtbaren Materials kann die erfindungsgemäße Vorrichtung eine Strahlenquelle umfassen, die so ausgelegt ist, dass sie das strahlungshärtbare Material härten kann. Insbesondere ist die Strahlenquelle so ausgelegt, dass sie Strahlung mit der notwendigen Energie und Intensität auf einen Teil der äußeren Oberfläche des gaspermeablen Mantels richtet, auf den das strukturierbare Material durch die Ausgabeeinheit ausgegeben wurde.

Im Falle eines durch eine chemische Reaktion härtbaren strukturierbaren Materials kann ein Reaktionspartner für die im ersten Zustand des strukturierbaren Materials vorliegenden Monomer- oder Oligomereinheiten bereitgestellt werden. Dieses Bereitstellen kann dahingehend ausgeführt werden, dass die Reaktionspartner bereits vor dem Ausgeben des strukturierbaren Materials in die Negativstruktur eingebracht werden. Alternativ kann die Ausgabeeinheit so ausgestaltet sein, dass sie die Reaktionspartner während des Ausgebens beimischt. Als weitere Alternative kann der Reaktionspartner nach dem Ausgeben des strukturierbaren Materials durch Aufsprühen oder Aufdampfen bereitgestellt werden.

In einer weiteren Ausführungsform ist die Verfestigung des strukturierbaren Materials vom ersten in den zweiten Zustand konzentrationsabhängig. In diesem Fall liegt das strukturierbare Material in dem ersten Zustand in verdünnter Form in einer Lösung oder ein Gel zusammen mit einem Lösungsmittel vor. Durch Entfernen bzw. Verdampfen des Lösungsmittels nach dem Ausgeben des strukturierbaren Materials wird dieses in den zweiten Zustand überführt. Das Entfernen des Lösungsmittels kann hierbei aktiv, beispielsweise durch Erwärmen oder Verringerung des Umgebungsdruckes, oder passiv erfolgen.

Das strukturierbare Material kann weiter ein Vorläufermaterial für einen metallischen oder keramischen Werkstoff sein, das durch Nachbehandlung in einen solchen Werkstoff überführt werden kann. Die Nachbehandlung kann beispielsweise eine thermische Nachbehandlung wie etwa Sintern oder eine Nachbehandlung mit Strahlung (bevorzugt Infrarotstrahlung, sichtbares Licht, Ultraviolettstrahlung einschließlich EUV, Mikrowellenstrahlung oder Röntgenstrahlung) oder eine Kombination aus beiden sein.

Erfindungsgemäß ist es weiter möglich, dass das Überführen von dem ersten Zustand in den zweiten Zustand des strukturierbaren Materials auf einer Kombination der oben genannten Abläufe beruht.

In einem Fall, in dem das strukturierbare Material ein thermoplastisches Material ist, umfasst die erfindungsgemäße Vorrichtung vorzugsweise weiter eine Heizeinheit, die so ausgelegt ist, dass sie die Oberfläche des gaspermeablen Mantels zumindest in dem Bereich, auf den die Ausgabe bzw. Zuführeinheit das thermoplastische Material zuführt, auf eine zur Abformung geeignete Temperatur erwärmen kann.

Vorzugsweise ist die Heizeinheit in der Lage die Oberfläche des gaspermeablen Mantels kontaktlos zu erwärmen. Hierfür eignen sich beispielsweise Heizeinheiten, die Strahlung im infraroten Bereich aussenden. Ein Beispiel für eine solche Heizeinheit ist ein Keramikheizelement.

Wie vorstehend ausgeführt kann die Heizeinheit die Oberfläche des gaspermeablen Mantels auf eine zur Abformung geeignete Temperatur erwärmen. Diese Temperatur ist abhängig von dem zu verarbeitenden thermoplastischen Material und entspricht der thermoplastischen Temperatur des Materials oder liegt darüber. Typischerweise liegt die Oberflächentemperatur des gaspermeablen Mantels zwischen 0 und 20 K über der thermoplastischen Temperatur des thermoplastischen Materials.

Im Rahmen der vorliegenden Anmeldung entspricht die thermoplastische Temperatur der Temperatur, ab der es möglich ist, ein thermoplastisches Material plastisch zu verformen. Abhängig von dem verwendeten thermoplastischen Material kann die thermoplastische Temperatur der Glasübergangstemperatur oder der Schmelztemperatur des thermoplastischen Materials entsprechen oder dazwischen liegen.

Die erfindungsgemäße Vorrichtung kann weiter eine Kühleinheit umfassen, die so ausgelegt ist, dass sie das strukturierbare Material nach der Abformung abkühölen kann. In einem Fall, in dem das strukturierbare Material ein thermoplastisches Material ist, ist die Kühleinheit bevorzugt so ausgelegt, dass sie das thermoplastische Material auf eine Temperatur abkühlen kann, die unterhalb der thermoplastischen Temperatur des thermoplastischen Materials liegt. Auf diese Weise kann das thermoplastische Material und die darin abgeformten Strukturen in kurzer Zeit verfestigt werden. Somit kann eine kontinuierliche Folie des thermoplastischen Materials mit darin abgeformten Strukturen auf der Oberfläche des gaspermeablen Mantels gebildet werden. Die Kühleinheit kann beispielsweise als ein Wasserbad im unteren Bereich der Walze oder durch einen tangential anströmenden Luft- oder Wasser-Vorhang ausgestaltet sein.

Gegebenenfalls umfasst die Vorrichtung weiter eine Abnehmeinheit, die nach einer gegebenenfalls vorhandenen Kühleinheit oder Strahlenquelle angeordnet ist, und dazu ausgelegt ist, das strukturierbare Material nach dem Verfestigen von der gaspermeablen Walze abzunehmen. Die Abnehmeinheit kann beispielsweise als Spann- und/oder Lenkwalze ausgeführt sein, die das geformte und verfestigte strukturierbare Material kontinuierlich von der Oberfläche des gaspermeablen Mantels abzieht, um die Oberfläche für einen erneuten Durchgang des Abformens freizumachen.

Die vorstehend beschriebene Vorrichtung kann weiter eine Beschichtungseinheit umfassen, die nach der gaspermeablen Walze angeordnet ist und so ausgelegt ist, dass sie ein von der gaspermeablen Walze abgenommenes verfestigtes strukturierbares Material mit einer Beschichtung versehen kann. Diese Beschichtung kann beispielsweise eine Schutzbeschichtung, die die abgeformten Oberflächenstrukturen vor Beschädigungen schützt, sein, oder eine Haftmittelschicht, die dem späteren Anbringen des verfestigten strukturierbaren Materials auf einer Oberfläche dient. In diesem Fall kann auf der Haftmittelschicht weiter eine Abziehschicht vorgesehen sein, die die Haftmittelschicht vor ungewolltem Kontakt schützt und vor dem Anbringen auf eine Oberfläche abgenommen wird.

In einer besonderen Ausführungsform betrifft die vorliegende Erfindung eine Vorrichtung zur kontinuierlichen Abformung von Oberflächenstrukturen in ein thermoplastisches Material, wobei die Vorrichtung umfasst:

(i) eine poröse Walze mit einem gaspermeablen, elastomeren Mantel und einer hohlen Achse, wobei die Oberfläche des elastomeren Mantels eine Negativstruktur der abzuformenden Oberflächenstrukturen trägt;

(ii) eine Ausgabeeinheit, zur Ausgabe eines thermoplastischen Materials, wobei die Ausgabeeinheit so gestaltet ist, dass sie das thermoplastische Material auf die Oberfläche des elastomeren Mantels der porösen Walze ausgibt;

(iii) eine Heizeinheit, die so ausgelegt ist, dass sie die Oberfläche des elastomeren Mantels zumindest in dem Bereich, auf den die Ausgabeeinheit das thermoplastische Material ausgibt, auf eine zur Abformung geeignete Temperatur erwärmen kann; und

(iv) eine Kühleinheit, die so ausgelegt ist, dass sie das thermoplastische Material nach der Abformung auf eine Temperatur abkühlen kann, die unterhalb der thermoplastischen Temperatur des thermoplastischen Materials liegt.

Für diese besondere Ausführungsform gelten die vorstehend genannten Einschränkungen, Modifikationen und Vorteile entsprechend.

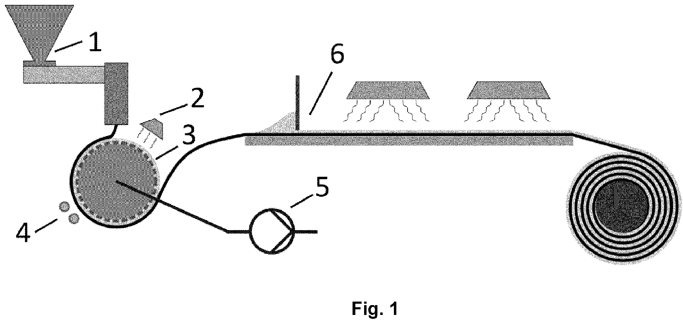

Eine beispielhafte Vorrichtung ist in der Fig. 1 dargestellt. Die in Fig. 1 dargestellte Vorrichtung umfasst eine Ausgabeeinheit 1, eine Heizeinheit 2, eine gaspermeable Walze mit gaspermeablem Mantel 3, eine Kühleinheit 4, eine Vakuumpumpe 5 und eine Beschichtungseinheit 6. In der beispielhaften Vorrichtung ist die Ausgabeeinheit 1 eine Schmelzextrusionseinheit mit Schlitzdüse.

Die vorliegende Anmeldung betrifft weiter ein Verfahren zur kontinuierlichen Abformung von Oberflächenstrukturen in ein strukturierbares Material unter Verwendung der vorstehend beschriebenen Vorrichtung, wobei das Verfahren die folgenden Schritte umfasst:

(a) Ausgeben eines strukturierbaren Materials mittels der Ausgabeeinheit auf die äußere Oberfläche des gaspermeablen, bevorzugt elastomeren Mantels der gaspermeablen Walze;

(b) Abformen der auf der äußeren Oberfläche des gaspermeablen, bevorzugt elastomeren Mantels der gaspermeablen Walze vorhandenen Negativstruktur der abzuformenden Oberflächenstrukturen in das strukturierbare Material, um eine Positivstruktur der Oberflächenstrukturen in dem strukturierbaren Material zu bilden; und

(c) Verfestigen des strukturierbaren Materials durch Kühlen und/oder Härten, um eine Folie des verfestigten, strukturierbaren Materials mit der Positivstruktur der Oberflächenstrukturen zu erhalten, wobei die Schritte (a) bis (c) kontinuierlich durchgeführt werden.

Im Schritt (a) des erfindungsgemäßen Verfahrens wird ein strukturierbares Material mittels der Ausgabeeinheit auf die Oberfläche des gaspermeablen Mantels der gaspermeablen Walze ausgegeben. Gegebenenfalls kann der Bereich der Oberfläche des gaspermeablen Mantels, auf den das ausgegebene strukturierbare Material trifft, durch die Heizeinheit auf eine zur Abformung geeignete Temperatur erwärmt werden.

Wenn das strukturierbare Material auf die Oberfläche des gaspermeablen Mantels der gaspermeablen Walze trifft, dringt es in die Negativstruktur der abzuformenden Oberflächenstrukturen ein und füllt diese aus. Somit wird im Schritt (b) des erfindungsgemäßen Verfahrens die auf der Oberfläche des gaspermeablen Mantels der gaspermeablen Walze vorhandene Negativstruktur der abzuformenden Oberflächenstrukturen in das strukturierbare Material abgeformt, um eine Positivstruktur der Oberflächenstrukturen in dem strukturierbaren Material zu bilden.

Hierbei ist zu beachten, dass das strukturierbare Material bereits bei normalem Raumdruck (1008 mbar) eine gute Eindringeigenschaft aufweist, da Gase, die zwischen der Oberfläche des gaspermeablen Mantels und dem strukturierbaren Material eingeschlossen sind, durch den gaspermeablen Mantel in den Gasrezipienten austreten können.

Vorzugsweise werden der gaspermeable Mantel und das strukturierbare Material aufeinander abgestimmt ausgewählt, um eine möglichst gute Eindringeigenschaft des strukturierbaren Materials zu gewährleisten. Diese Eindringeigenschaft des strukturierbaren Materials kann durch den Kontaktwinkel, den das strukturierbare Material in seinem ersten Zustand auf dem gaspermeablen Mantel bildet, ausgedrückt werden. Vorzugsweise beträgt der Kontaktwinkel weniger als 90°.

Sollte die Eindringeigenschaft des strukturierbaren Materials auf Grund materialspezifischer Eigenschaften, beispielsweise bei einem Kontaktwinkel von 90° oder mehr, oder der Beschaffenheit der abzuformenden Oberflächenstrukturen bei Normaldruck ungenügend sein, so kann die gaspermeable Walze im Inneren und/oder der Gasrezipient mit Unterdruck bzw. Vakuum beaufschlagt werden. Hierbei entsteht eine Sogwirkung durch die gaspermeable Walze, den Gasrezipienten und den gaspermeablen Mantel, die das strukturierbare Material tiefer in die Negativstruktur eindringen lässt.

Im Fall von günstigeren Kontaktwinkeln von unter 90° ist die Unterdruck- bzw. Vakuumbeaufschlagung förderlich aber keine notwendige Bedingung für das Eindringen des strukturierbaren Materials.

Bevorzugt wird das Verfahren bei einem Druck von 750 mbar oder weniger, insbesondere von 500 mbar oder weniger, im Inneren der gaspermeablen Walze durchgeführt. Im Hinblick auf eine vollständigere und/oder schnellere Abformung der Oberflächenstrukturen beträgt der im Inneren der gaspermeablen Walze für das Verfahren bereitgestellte Druck weiter bevorzugt 350 mbar oder weniger, noch weiter bevorzugt 100 mbar oder weniger, und am meisten bevorzugt 50 mbar oder weniger.

Eine weitere Möglichkeit, die Eindringeigenschaft des strukturierbaren Materials zu verbessern, ist das beschriebene Verfahren in Gegenwart eines Prozessgases durchzuführen. Als Prozessgas eignen sich hierbei sämtliche Gase, für die der gaspermeable Mantel eine höhere Gaspermeabilität aufweist als für Umgebungsluft. Beispiele für das Prozessgas sind Stickstoff ($N_2$), Helium (He), Wasserstoff ($H_2$), $CO_2$ oder Gemische daraus. Die Verwendung des Prozessgases ist besonders vorteilhaft im Zusammenspiel mit der Beaufschlagung der gaspermeablen Walze und/oder des Gasrezipienten mit Unterdruck bzw. Vakuum, da dann die Form schneller mit dem strukturierbaren Material gefüllt wird. Auch ohne Unterdruck- bzw. Vakuumbeaufschlagung ist die Verwendung eines Gases mit hoher Diffusionskonstante vorteilhaft.

Als Maß für die Eindringeigenschaft kann das Füllhöhenverhältnis der abgeformten Oberflächenstrukturen ermittelt werden. Hierbei wird die Höhe der abgeformten Oberflächenstruktur mit der theoretischen Höhe der Oberflächenstrukturen in einer für die Herstellung des gaspermeablen Mantels verwendeten Masterstruktur verglichen und das Füllhöhenverhältnis gemäß nachstehender Formel berechnet:

$$\text{Füllhöhenverhältnis } h_{\text{fill}} = \frac{h_{gemessen}}{h_{Master}}$$

Um eine möglichst vollständige Abformung der Oberflächenstrukturen zu gewährleisten, werden die Prozessparameter vorzugsweise so eingestellt, dass das Füllhöhenverhältnis mindestens 80%, weiter bevorzugt mindestens 90% und besonders bevorzugt mindestens 95% beträgt. Bei ausreichender Prozesszeit ist ein Füllhöhenverhältnis von 100% erreichbar, da das Restgas vollständig durch den gaspermeablen Mantel abfließen kann.

Im Schritt (c) des erfindungsgemäßen Verfahrens wird das strukturierbare Material nach der Abformung durch Kühlen oder Härten verfestigt, um eine Folie des verfestigten, strukturierbaren Materials mit der Positivstruktur der Oberflächenstrukturen zu erhalten.

Im Falle eines thermoplastischen Materials als strukturierbares Material erfolgt das Verfestigen im Schritt (c) beispielsweise durch Abkühlen auf eine Temperatur, die unterhalb der thermoplastischen Temperatur des thermoplastischen Materials liegt. Dieses Abkühlen erfolgt vorzugsweise durch die Kühleinheit, so dass das thermoplastische Material aktiv auf eine Temperatur unterhalb der thermoplastischen Temperatur abgekühlt wird. Durch das forcierte Abkühlen kann die Prozessgeschwindigkeit erhöht werden.

Im Falle eines strahlungshärtbaren Materials als strukturierbares Material erfolgt das Verfestigen des strahlungshärtbaren Materials in Schritt (c) beispielsweise durch Bestrahlen mit zum Härten des strahlungshärtbaren Materials geeigneten Strahlung.

Im Falle eines durch eine chemische Reaktion härtbaren Materials erfolgt das Verfestigen des durch eine chemische Reaktion härtbaren Materials in Schritt (c) durch Zugabe chemischer Agenten oder durch Verdunstung eines Lösungsmittels erfolgt.

Je nach Art des strukturierbaren Materials ist auch eine Kombination der oben genannten Verfestigungsschritte möglich.

Nach dem Abkühlen kann die erhaltene Folie von der Oberfläche des gaspermeablen Mantels abgenommen und gegebenenfalls weiterverarbeitet werden. Beispielsweise kann die Folie mit einer Schutzschicht oder einer Haftmittelschicht versehen werden.

Generell ist zu beachten, dass die Schritte (a) bis (c) des erfindungsgemäßen Verfahrens kontinuierlich durchgeführt werden. Das bedeutet, dass sich die gaspermeable Walze um ihre Symmetrieachse dreht, so dass dieselbe Stelle auf der Oberfläche des gaspermeablen Mantels erst von der Ausgabeeinheit mit dem strukturierbaren Material versehen wird, das strukturierbare Material anschließend verfestigt wird und der gaspermeable Mantel schließlich von dem verfestigten strukturierbaren Material befreit wird, um anschließend in einem neuen Zyklus wieder von der Ausgabeeinheit mit dem strukturierbaren Material versehen zu werden.

Die vorliegende Anmeldung betrifft weiter eine durch das vorstehende Verfahren hergestellte Folie. Diese Folie trägt auf ihrer Oberfläche die Positivstruktur der gewünschten Oberflächenstrukturen. Die Dicke der Grundfolie, also die Dicke der Folie an Stellen, an denen keine Oberflächenstruktur vorhanden ist, kann von einem Fachmann durch Änderung der Prozessbedingungen, beispielsweise der Auftragmenge des strukturierbaren Materials und der Prozessgeschwindigkeit, entsprechend den gewünschten Eigenschaften eingestellt werden. Die Gesamtdicke der Folie ergibt sich folglich aus der Dicke der Grundfolie und der Höhe der Oberflächenstrukturen.

Die Grundfolie hat vorzugsweise eine Dicke von 200 $\mu$m bis 1 mm, besonders bevorzugt von 300 $\mu$m bis 600 $\mu$m. Auf diese Weise kann eine ausreichende Stabilität der Folie sichergestellt werden.

Die erfindungsgemäße Folie findet beispielsweise Anwendung für die Herstellung von Strukturen im Millimeter-, Mikrometer- oder Nanometerbereich, bevorzugt mit Strukturgrößen zwischen 1 Millimeter und 50 Nanometer, für die Anwendung zur Haltung einer Luftschicht unter Wasser, für die Anwendung zur Herstellung und Replikation optischer Strukturen, insbesondere auch periodischer optischer Strukturen, optischer Gitter und optischer Sensoren sowie nach Metallisierung und/oder Kontaktierung als Matrix für mikro- und nanoelektronische Schaltungen, optische Filter und Antireflexbeschichtungen sowie im Bereich mechanischer Anwendungen als Antihaftschichten bzw. Schichten mit reibungsreduzierenden Eigenschaften.

Zusammenfassend weist die beanspruchte Erfindung folgende Vorteile auf:

- Die beschriebene Vorrichtung ermöglicht ein kontinuierliches Abformen von Oberflächenstrukturen in ein strukturierbares Material;

- Eine Abformung von Oberflächenstrukturen mit einem Aspektverhältnis von 1,0 oder mehr ist möglich; und

- Durch Beaufschlagung der gaspermeablen Walze im Inneren und/oder des Gasrezipienten mit Unterdruck bzw. Vakuum kann das Eindringverhältnis des strukturierbaren Materials verbessert werden bzw. die Prozesszeit verkürzt werden;

- Bei geeigneten Prozessparametern (ausreichende Prozesszeit und ausreichend hohe Temperatur) ist ein Eindringen des strukturierbaren Materials in die Negativform zu 100% möglich, da das Gas vollständig aus der Negativstruktur in den Gasrezipienten verdrängt werden kann.

Die Figuren zeigen:

Figur 1: Beispielhafte Vorrichtung zur kontinuierlichen Abformung von Oberflächenstrukturen in ein thermoplastisches Material

Figur 2: Füllhöhenverhältnis der Beispielstrukturen P25 (Säulen mit 25 $\mu$m Durchmesser und 50 $\mu$m Höhe) und P2.5 (Säulen mit 2,5 $\mu$m Durchmesser und 5 $\mu$m Höhe) relativ zum Druck innerhalb der gaspermeablen Walze und rasterelektronenmikroskopische Abbildungen der bei unterschiedlichen Drücken abgeformten P25 Struktur

Die vorliegende Erfindung wird durch die nachstehenden, nicht einschränkenden Beispiele weiter beschrieben:

Herstellung eines gaspermeablen, elastomeren Mantels

Die Herstellung eines gaspermeablen, elastomeren Mantels kann wie vorstehend beschrieben in drei Hauptschritte unterteilt werden:

- Erstellung einer Masterstruktur;

- mehrfaches Abformen der Masterstruktur mit einem gaspermeablen, elastomeren Material; und

- Verknüpfen der einzelnen Replikate, um den gaspermeablen, elastomeren Mantel zu bilden.

Die Masterstruktur wurde in einer 2D-Modellierungssoftware (KLayout) entworfen, bevor sie durch Laserlithographie in einen mit einem SU-8-Fotoresist präparierten Wafer geschrieben wurde. Die Struktur bestand aus periodisch angeordneten zylindrischen Säulen mit einem Aspektverhältnis (Säulenhöhe/Säulendurchmesser) von 2,0. Zwei verschiedene Masterstrukturen wurden getestet. Struktur P2.5 bestand aus Säulen mit einem Durchmesser von 2,5 $\mu$m und einer Höhe von 5,0 $\mu$m. Struktur P25 bestand aus Säulen mit einem Durchmesser von 25 $\mu$m und einer Höhe von 50 $\mu$m.
Nach der Belichtung und Entwicklung erhielt man die gewünschte Positivstruktur, mit geringen lateralen Abweichungen aufgrund von prozessbedingten Fehlern durch Überpolymerisation. Die Struktur wurde als Quadrat belichtet, da dies theoretisch eine spaltfreie Kachelung der Oberflächen ermöglicht.
Anschließend wurde die erhaltene Masterstruktur in Silikon abgeformt. Nach dem Befüllen des Masters mit flüssigem Silikon wurde dieser in einem Exsikkator unter Vakuum (p=30 mbar) gesetzt. Dies diente dazu, die Penetration des Silikons zu erleichtern, indem die Luft aus der Form entfernt wurde.
Von der erhaltenen Negativstruktur in Silikon wurde wiederrum eine Positivstruktur in Epoxidharz hergestellt.
Von dieser positiven Nachbildung in Epoxid wurden mehrere negative Abformungen in "Thermosilikon" (Trollfactory Type 3, Trollfactory AG) durchgeführt. Diese einzelnen Abformungen wurden auf die richtige Größe geschnitten und zusammengefügt, um eine Fläche zu erhalten, die der Oberfläche der gaspermeablen Walze entsprach. Beispielsweise wurde für eine Walze mit einem Durchmesser von 200 mm und einer Breite von 200 mm ein gaspermeabler Mantel benötigt, der eine Fläche von ca. 620 x 200 mm$^2$ aufweist.
Der so erhaltene Mantel wurde auf eine poröse Walze aufgebracht, um eine strukturierte Walze zu erhalten. Die Walze hatte eine hohle Achse und bestand aus porösem Gussaluminium mit einem Durchmesser von 200 mm und einer Breite von 200 mm. Die Porengröße des porösen Aluminiums betrug zwischen 200 $\mu$m und 400 $\mu$m, wobei die Poren sowohl von der Oberfläche der Walze als auch von der hohlen Achse aus zugänglich waren.

Abformung mittels der hergestellten Walze

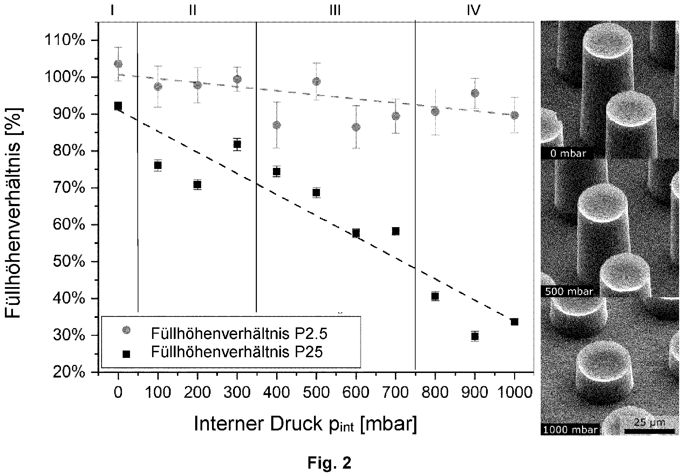

Der Versuchsaufbau bestand aus einem Einschneckenextruder KD19/20 (Brabender GmbH, Duisburg), einer Breitschlitzdüse (Schlitzbreite 200 mm, Schlitzhöhe 800 $\mu$m) und der strukturierten Walze. Die Walze wurde mit einem keramischen Heizer auf 70 °C vorgewärmt, um die Replikationsqualität durch Verlängerung der Schmelzzeit des thermoplastischen Materials zu verbessern. Polyethylen (Total LDPE 1700 18C, Total) wurde unter einem Walzeninnendruck von Raumdruck bis zu $p_{abs}$= 50 mbar bei einer Kopftemperatur von 210 °C und einem Massenstrom von 1,3 kg/h aufgetragen.
Um den Einfluss der Vakuumstärke zu quantifizieren, wurden dieselben Strukturen bei verschiedenen Vakuumniveaus im Inneren der Rolle abgeformt. Der Innendruck der Rolle wurde zwischen atmosphärischem ($p_{abs}$ = 1008 mbar) und minimal erreichbarem Druck in 100 mbar-Schritten variiert. Um den Einfluss zu erkennen, wurde das Füllhöhenverhältnis berechnet, indem die Höhe der abgeformten Säulen mittels Rasterelektronenmikroskopie gemessen und mit der Höhe der Säulen in der Masterstruktur verglichen wurde. Die Ergebnisse sind in Tabelle 1 und Fig. 2 dargestellt.

$$\text{Füllhöhenverhältnis } h_{\text{fill}} = \frac{h_{gemessen}}{h_{Master}}$$

Tabelle 1: Füllhöhenverhältnis der Strukturen P2.5 und P25 bei unterschiedlichen Drücken

| Druck /mbar | Füllhöhenverhältnis P2.5 | Füllhöhenverhältnis P25 |
|---|---|---|
| 1000 | 89,7% | 33,7% |
| 900 | 95,6% | 29,8% |
| 800 | 90,6% | 40,7% |
| 700 | 89,4% | 58,2% |
| 600 | 86,5% | 57,7% |
| 500 | 98,8% | 68,7% |
| 400 | 87,0% | 74,5% |
| 300 | 99,4% | 81,8% |
| 200 | 97,8% | 70,9% |
| 100 | 97,4% | 76,1% |
| < 50 | 103,6% | 92,2% |

Bei der Replikation von kleinen strukturierten Oberflächen der Struktur P2.5 führte die Evakuierung der Walze zu einer Verbesserung des Höhenverhältnisses um bis zu 16 %. Bemerkenswert ist, dass die Replikationshöhe (h = 5,11 $\mu$m) bei $p_{nominal}$ < 50 mbar die Sollhöhe der Struktur (h = 5 $\mu$m) übertraf (Füllhöhenverhältnis: 103,6 %). Dies lässt sich sowohl durch Messfehler als auch durch Größenfehler erklären, die sich aus dem Herstellungsprozess ergeben, insbesondere durch Überpolymerisation während des DLW-Prozesses, was zu größeren Säulen als ursprünglich vorgesehen führen kann.

Der Einfluss des Vakuums war gravierender, wenn die Abformung der Struktur P25 untersucht wurde. Hier führte der Einsatz von Vakuum zu einer Verbesserung des Replikationsverhältnisses um 58 %, mit einer Replikationshöhe von 46,1 $\mu$m bei maximal erreichbarem Unterdruck (Füllhöhenverhältnis 92,2 %). Bei den kleineren Strukturen herrscht aufgrund der Benetzbarkeit der Form durch das thermoplastische Material ein höherer Laplacedruck (Kapillardruck), der proportional zu 1/r mit r, Radius der Pore bzw. der Säule, ist. Dies erklärt warum bei den kleineren Strukturen weniger Vakuum notwendig ist, um eine vollständige Befüllung zu erreichen.

Betrachtet man die Replikation solcher Strukturen, so lassen sich, wie in Fig. 2 dargestellt, für beide Strukturen vier verschiedene Regionen identifizieren. Region I bei minimal erreichbarem Walzendruck führt zu einer vollständigen Replikation. Der Bereich II ist ein Regime mit hohem Füllgrad, bei dem eine Abnahme des Druckgradienten zu einer vernachlässigbaren Abnahme des Füllgrades führt (100 mbar < Replikation < 350 mbar). Der nachstehende Bereich III ist ein Übergangsbereich, in dem das Replikationsverhältnis bei einer Abnahme des Druckgradienten stark abnimmt. Der abschließende Bereich IV zeigt keine Veränderung der Replikationshöhe bei höherem Druckgefälle. Hier ist der Vorteil des Drucks nicht mehr vorhanden. Der optimale Betriebsbereich liegt also bei maximal erreichbarer Druckdifferenz. Die Regionen sind in den verschiedenen Strukturen unterschiedlich stark. Dieser Unterschied lässt sich an der Größe der Strukturen ablesen. Die Veränderungen in den kleinen Strukturen liegen innerhalb der Messgenauigkeit, was zu einem schwächeren Effekt führt.

Haltbarkeit des gaspermeablen, elastomeren Mantels

Die Replikationsqualität nach wiederholten Replikationszyklen kann als angemessener Maßstab für die Beurteilung der Haltbarkeit des Mantels und der Qualität des Produkts herangezogen werden.

Zur Qualitätsbeurteilung wurde das Replikationsverhältnis in 48 einzelnen Bereichen, die jeweils 400 Säulen umfassen und im Verlauf von 1000 m produzierter Folie entnommen wurden, verglichen. Dies ermöglichte eine allgemeine Qualitätsbestimmung. Das Replikationsverhältnis wurde anhand optischer Aufnahmen gemäß der nachstehenden Formel bestimmt, wobei sowohl ganz oder teilweise fehlende Säulen als auch miteinander verschmolzene, nebeneinanderliegende Säulen als fehlerhaft charakterisiert wurden:

$$\text{Replikationsverhältnis } r_{rep} = 1 - \frac{n_{fehlerhafte\ Säulen}}{n_{Säulen\ theoretisch}}$$

Es zeigte sich keine Verschlechterung der Reproduktionsqualität mit zunehmender Nutzungsdauer. In allen untersuchten Bereichen liegt der Reproduktionsgrad der produzierten Folie über 99,75 %, wobei der Durchschnitt über alle Bereiche 99,892 % +/- 0,064 % beträgt. Dies ist ein ausgezeichneter Indikator für die dauerhafte Qualität des gaspermeablen, elastomeren Mantels.

Bezugszeichen:

1 Ausgabeeinheit

2 Heizeinheit

3 gaspermeable Walze mit gaspermeablem elastomeren Mantel

4 Kühleinheit

5 Vakuumpumpe

6 Beschichtungseinheit

**Patentansprüche**

1. Vorrichtung zur kontinuierlichen Abformung von Oberflächenstrukturen in ein strukturierbares Material, wobei die Vorrichtung umfasst:

   (i) eine gaspermeable Walze mit einem gaspermeablen, bevorzugt elastomeren Mantel, wobei die äußere Oberfläche des Mantels eine Negativstruktur der abzuformenden Oberflächenstrukturen trägt;
   (ii) eine Ausgabeeinheit zur Ausgabe des strukturierbaren Materials, wobei die Ausgabeeinheit so gestaltet ist, dass sie das strukturierbare Material auf die äußere Oberfläche des gespermeablen Mantels ausgibt; und
   (iii) einen Gasrezipient hinter der inneren Manteloberfläche, wobei der Gasrezipient so ausgestaltet ist, dass er das zu füllende Volumen der abzuformenden Oberflächenstrukturen aufnehmen oder abführen kann.

2. Vorrichtung nach Anspruch 1, wobei der gaspermeable Mantel der gaspermeablen Walze austauschbar vorgesehen ist.

3. Vorrichtung nach Anspruch 1 oder 2, wobei um die Symmetrieachse der gaspermeablen Walze ein hohler oder gaspermeabler Bereich angeordnet ist, der auch die Symmetrieachse selbst mit umfassen kann.

4. Vorrichtung nach einem der Ansprüche 1 bis 3, wobei die gaspermeable Walze im Inneren und/oder der Gasrezipient mit Unterdruck bzw. Vakuum beaufschlagbar ist.

5. Vorrichtung nach einem der Ansprüche 1 bis 4, wobei die Vorrichtung mit einem Prozessgas beaufschlagbar ist, das einen geringeren Diffusionskoeffizienten aufweist als das Umgebungsgas außerhalb der Walze, vorzugsweise mit einem Prozessgas, ausgewählt aus der Gruppe, bestehend aus Stickstoff ($N_2$), Helium (He), Wasserstoff ($H_2$), $CO_2$ oder Gemischen daraus.

6. Vorrichtung nach einem der Ansprüche 1 bis 5, wobei die abzuformenden Oberflächenstrukturen ein Aspektverhältnis von mindestens 1,0 aufweisen.

7. Vorrichtung nach einem der Ansprüche 1 bis 6, wobei die Gaspermeabilität des gaspermeablen Mantels der gaspermeablen Walze für Stickstoff 200 Barrer oder mehr beträgt.

8. Vorrichtung nach einem der Ansprüche 1 bis 7, wobei die gaspermeable Walze aus einem porösen Metall oder Metalloxid oder einem keramischen Material oder einem Polymer, beispielsweise auf der Basis von Silikon oder Polyurethan oder Polystyrol oder aus einem offenporigen oder geschlossenporigen Polymerschaum geformt ist.

9. Vorrichtung nach einem der Ansprüche 1 bis 8, wobei das strukturierbare Material ein thermoplastisches Material ist.

10. Vorrichtung nach Anspruch 9, wobei die Vorrichtung weiter eine Heizeinheit umfasst, die so ausgelegt ist, dass sie die äußere Oberfläche des gaspermeablen Mantels zumindest in dem Bereich, auf den die Ausgabeeinheit das thermoplastische Material ausgibt, auf eine zur Abformung geeignete Temperatur erwärmen kann.

11. Vorrichtung nach Anspruch 9 oder 10, wobei die Vorrichtung weiter eine Kühleinheit umfasst, die so ausgelegt ist, dass sie das thermoplastische Material nach der Abformung auf eine Temperatur abkühlen kann, die unterhalb der thermoplastischen Temperatur des thermoplastischen Materials liegt.

12. Vorrichtung nach einem der Ansprüche 9 bis 11, wobei die Ausgabeeinheit eine Schmelzextrusionseinheit mit einer Schlitzdüse ist, die das thermoplastische Material in einem geschmolzenen Zustand ausgibt.

13. Vorrichtung nach einem der Ansprüche 1 bis 8, wobei das strukturierbare Material ein strahlungshärtbares Material oder ein durch eine chemische Reaktion härtbares Material ist.

14. Vorrichtung nach Anspruch 13, wobei die Vorrichtung weiter eine Strahlenquelle umfasst, die so ausgelegt ist, dass sie das strahlungshärtbare Material härten kann.

15. Vorrichtung nach einem der Ansprüche 1 bis 14, wobei die Vorrichtung weiter eine Beschichtungseinheit umfasst, die nach der gaspermeablen Walze angeordnet ist und so ausgelegt ist, dass sie das von der gaspermeablen Walze mit Oberflächenstrukturen versehene strukturierbare Material mit einer Schutzbeschichtung versehen kann.

16. Verfahren zur kontinuierlichen Abformung von Oberflächenstrukturen in ein strukturierbares Material unter Verwendung der Vorrichtung nach einem der Ansprüche 1 bis 15, wobei das Verfahren die folgenden Schritte umfasst:

(a) Ausgeben eines strukturierbaren Materials mittels der Ausgabeeinheit auf die äußere Oberfläche des gaspermeablen, bevorzugt elastomeren Mantels der gaspermeablen Walze;
(b) Abformen der auf der äußeren Oberfläche des gaspermeablen Mantels der gaspermeablen Walze vorhandenen Negativstruktur der abzuformenden Oberflächenstrukturen in das strukturierbare Material, um eine Positivstruktur der Oberflächenstrukturen in dem strukturierbaren Material zu bilden; und
(c) Verfestigen des strukturierbaren Materials durch Kühlen und/oder Härten, um eine Folie des verfestigten, strukturierbaren Materials mit der Positivstruktur der Oberflächenstrukturen zu erhalten, wobei die Schritte (a) bis (c) kontinuierlich durchgeführt werden.

17. Verfahren nach Anspruch 16, wobei im Inneren der gaspermeablen Walze und/oder der Gasrezipient mit Unterdruck bzw. Vakuum beaufschlagt wird.

18. Verfahren nach Ansprüche 16 oder 17, wobei das Verfahren in einem Prozessgas durchgeführt wird, das einen geringeren Diffusionskoeffizienten aufweist als das Umgebungsgas außerhalb der Walze, vorzugsweise in einem Prozessgas, ausgewählt aus der Gruppe, bestehend aus Stickstoff ($N_2$), Helium (He), Wasserstoff ($H_2$), $CO_2$ oder Gemischen daraus.

19. Verfahren nach einem der Ansprüche 16 bis 18, wobei das strukturierbare Material ein thermoplastisches Material ist und im Schritt (a) der Bereich, auf den die Ausgabeeinheit das thermoplastische Material ausgibt, auf eine zur Abformung geeignete Temperatur erwärmt wurde und das Verfestigen des thermoplastischen Materials in Schritt (c) durch Kühlen auf eine Temperatur, die unterhalb der thermoplastischen Temperatur des thermoplastischen Materials liegt, erfolgt.

20. Verfahren nach einem der Ansprüche 16 bis 18, wobei das strukturierbare Material ein strahlungshärtbares Material ist und das Verfestigen des strahlungshärtbaren Materials in Schritt (c) durch Bestrahlen mit zum Härten des strahlungshärtbaren Materials geeigneter Strahlung erfolgt.

21. Verfahren nach einem der Ansprüche 16 bis 18, wobei das strukturierbare Material ein durch eine chemische Reaktion härtbares Material ist und das Verfestigen des durch eine chemische Reaktion härtbaren Materials in Schritt (c) durch Zugabe chemischer Agentien oder durch Verdunstung eines Lösungsmittels erfolgt.

22. Folie, die durch das Verfahren nach einem der Ansprüche 16 bis 21 gebildet wurde.

23. Verwendung der Folie nach Anspruch 22 für die Herstellung von Strukturen im Millimeter-, Mikrometer- oder Nanometerbereich, bevorzugt mit Strukturgrößen zwischen 1 Millimeter und 50 Nanometer, für die Anwendung zur Haltung einer Luftschicht unter Wasser, für die Anwendung zur Herstellung und Replikation optischer Strukturen, insbesondere auch periodischer optischer Strukturen, optischer Gitter und optischer Sensoren sowie nach Metallisierung und/oder Kontaktierung als Matrix für mikro- und nanoelektronische Schaltungen, optische Filter und Antireflexbeschichtungen sowie im Bereich mechanischer Anwendungen als Antihaftschichten bzw. Schichten mit reibungsreduzierenden Eigenschaften.

Fig. 1

Fig. 2

**Europäisches Patentamt**
**European Patent Office**
**Office européen des brevets**

# EUROPÄISCHER RECHERCHENBERICHT

**Nummer der Anmeldung**

EP 25 17 6794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 007494 A1 (WINDHAGER HANDELSGESELLSCHAFT M B H [AT]) 11. August 2011 (2011-08-11) | 1,3-10, 12,13, 15-17, 19,22,23 | INV. B29C33/38 B29C33/42 B29C33/56 |
| Y | * Zusammenfassung * * Abbildungen 1-9 * * Absätze [0010], [0016], [0019], [0035], [0036], [0039], [0040], [0044], [0045], [0047], [0052], [0060] * ----- | 13,14, 20,21 | B29C41/26 B29C43/22 ADD. G03G7/00 B29C59/06 |
| X | DE 10 2010 007493 A1 (WINDHAGER HANDELSGES M B H [AT]) 11. August 2011 (2011-08-11) * Zusammenfassung * * Abbildungen 1-7i * ----- | 1,16,22, 23 | |
| X | WO 99/54106 A2 (WAGNER WERNER [ES]) 28. Oktober 1999 (1999-10-28) | 1,3,4,8, 11,12, 16,19, 22,23 | |
| | * Seite 1, Zeile 17 - Seite 2, Zeile 17 * * Seite 3, Zeile 25 - Seite 4, Zeile 4 * * Seite 6, Zeile 8 - Zeile 13 * * Seite 7, Zeile 19 - Zeile 20 * * Seite 6, Zeile 23 - Zeile 25 * * Abbildung 1 * ----- | | RECHERCHIERTE SACHGEBIETE (IPC) B29C G03F |
| X | US 2020/354888 A1 (KIM KITAE [KR] ET AL) 12. November 2020 (2020-11-12) * Zusammenfassung * * Abbildung 3 * ----- | 1,2,4, 17,22 | |
| X,P | WO 2024/106315 A1 (MIDORI AUTO LEATHER CO LTD [JP]) 23. Mai 2024 (2024-05-23) * Zusammenfassung * * Abbildung 10 * ----- -/-- | 1 | |

Der vorliegende Recherchenbericht wurde für alle Patentansprüche erstellt

| Recherchenort | Abschlußdatum der Recherche | Prüfer |
|---|---|---|
| München | 8. August 2025 | Alink, Maarten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Europäisches Patentamt

European Patent Office

Office européen des brevets

**EUROPÄISCHER RECHERCHENBERICHT**

Nummer der Anmeldung

EP 25 17 6794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 072 961 A (GEOFFREY GILBERT) 15. Januar 1963 (1963-01-15) * Abbildungen 1, 2 * * Anspruch 1 * ----- | 1,16,22, 23 | |
| Y | DUMOND JARRETT J ET AL: "Recent developments and design challenges in continuous roller micro- and nanoimprinting", JOURNAL OF VACUUM SCIENCE AND TECHNOLOGY: PART B, AVS / AIP, MELVILLE, NEW YORK, NY, US, Bd. 30, Nr. 1, 1. Januar 2012 (2012-01-01) , Seiten 10801-10801, XP012162693, ISSN: 1071-1023, DOI: 10.1116/1.3661355 [gefunden am 2011-12-01] | 13,14, 20,21 | |
| A | * Seiten 010801-3, Spalte 1, Absatz 2 - Seiten 010801-4, Spalte 2, Absatz 1 * ----- | 1,16 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. August 2025 | Alink, Maarten |

**ANHANG ZUM EUROPÄISCHEN RECHERCHENBERICHT
ÜBER DIE EUROPÄISCHE PATENTANMELDUNG NR.**

EP 25 17 6794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2025

| Im Recherchenbericht angeführtes Patentdokument | Datum der Veröffentlichung | Mitglied(er) der Patentfamilie | Datum der Veröffentlichung |
|---|---|---|---|
| DE 102010007494 A1 | 11-08-2011 | BR 112012019890 A2 | 26-04-2016 |
| | | CA 2789227 A1 | 18-08-2011 |
| | | CN 102905867 A | 30-01-2013 |
| | | DE 102010007494 A1 | 11-08-2011 |
| | | EP 2533959 A1 | 19-12-2012 |
| | | RU 2012138347 A | 20-03-2014 |
| | | US 2012309603 A1 | 06-12-2012 |
| | | WO 2011098252 A1 | 18-08-2011 |
| DE 102010007493 A1 | 11-08-2011 | DE 102010007493 A1 | 11-08-2011 |
| | | WO 2011098251 A1 | 18-08-2011 |
| WO 9954106 A2 | 28-10-1999 | AU 3816999 A | 08-11-1999 |
| | | DE 19817237 A1 | 28-10-1999 |
| | | WO 9954106 A2 | 28-10-1999 |
| US 2020354888 A1 | 12-11-2020 | CN 111065775 A | 24-04-2020 |
| | | CN 111094650 A | 01-05-2020 |
| | | KR 20190030543 A | 22-03-2019 |
| | | KR 20190030544 A | 22-03-2019 |
| | | KR 20190030545 A | 22-03-2019 |
| | | KR 20190030547 A | 22-03-2019 |
| | | KR 20190030569 A | 22-03-2019 |
| | | KR 20190030570 A | 22-03-2019 |
| | | KR 20190030571 A | 22-03-2019 |
| | | KR 20190030572 A | 22-03-2019 |
| | | KR 20190030573 A | 22-03-2019 |
| | | KR 20190030574 A | 22-03-2019 |
| | | KR 20190030575 A | 22-03-2019 |
| | | KR 20190030576 A | 22-03-2019 |
| | | US 2020248402 A1 | 06-08-2020 |
| | | US 2020354888 A1 | 12-11-2020 |
| WO 2024106315 A1 | 23-05-2024 | KEINE | |
| US 3072961 A | 15-01-1963 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **PETER KJELDSEN**. Evaluation of gas diffusion through plastic materials used in experimental and sampling equipment. *Water Research*, 1993, vol. 27 (I), 121-131